# EUROPEAN PATENT APPLICATION

(11) **EP 1 092 460 A1**
(43) Date of publication of application: **18.04.2001**
(21) Application number: 00120613.5
(22) Date of filing: 21.09.2000
(51) Int. Cl.: B01D 29/15, B01D 29/66, B01D 35/15

(54) **Extended life filter**

(30) Priority: 12.10.1999 US 416677
(71) Applicant: NELSON INDUSTRIES, INC., Stoughton, Wisconsin 53589-0600 (US)
(72) Inventor: Verdegan, Barry M., Stoughton, Wisconsin 53589 (US); Schwandt, Brian W., Fort Atkinson, Wisconsin 53538 (US); Cady, Daniel R., Madison, Wisconsin 53713 (US)
(74) Representative: Gesthuysen, von Rohr & Eggert

(57) **Abstract**

A fluid filter (10) includes a pleated filter media element (30) and an outer wrap (72) of surface filter media, not depth media, to extend filter life. In reusable filter applications, the outer wrap retains sludge and semi-solid contaminants during filtration, and releases same upon backflushing, to enable cleaning.

## Description

The invention relates to fluid filters, and more particularly to extended life filters.

Customers are demanding ever increased filter life, even as fluid quality declines and soot/sludge levels rise with extended service intervals, including internal combustion engine lubricating oil applications, hydraulic oil applications, fuel filter applications, and so on.

The present invention addresses this need and provides a simple particularly effective solution including both for conventional single stage filters and for combination filters having a full-flow section and a bypass section, and also for both disposable filters and for cleanable reusable filters.

The present invention is directed to a fluid filter element comprising pleated filter media having an upstream dirty side and a downstream clean side and filtering fluid passing therethrough from said upstream side to said downstream side, an outer wrap of surface filter media, not depth media, adjacent said pleated filter media along said upstream side thereof, said outer wrap having an upstream side and a downstream side and filtering fluid passing therethrough from said upstream side of said outer wrap to said downstream side of said outer wrap.

The invention can be realized in a complete cleanable re-usable filter for filtering fluid as well.

Attached drawings show by way of example preferred embodiments of the invention. In the drawings:
- Fig. 1: is a sectional view illustrating a filter constructed in accordance with the invention, and is similar to Figs. 4 and 5 of U.S. Patent 5,779,900, incorporated herein by reference.
- Fig. 2: is a schematic sectional view taken along line 2-2 of Fig. 1.
- Fig. 3: is a graph showing filter performance.
- Fig. 4: is a partial sectional view of an alternate embodiment of the filter element of Fig. 1.
- Fig. 5: is like Fig. 4 and shows another alternate embodiment of the filter element.
- Fig. 6: is a sectional view of the full-flow filter element of Fig. 5 taken along line 6-6.
- Fig. 7: is a sectional view of the bypass filter element of Fig. 5 taken along line 7-7.

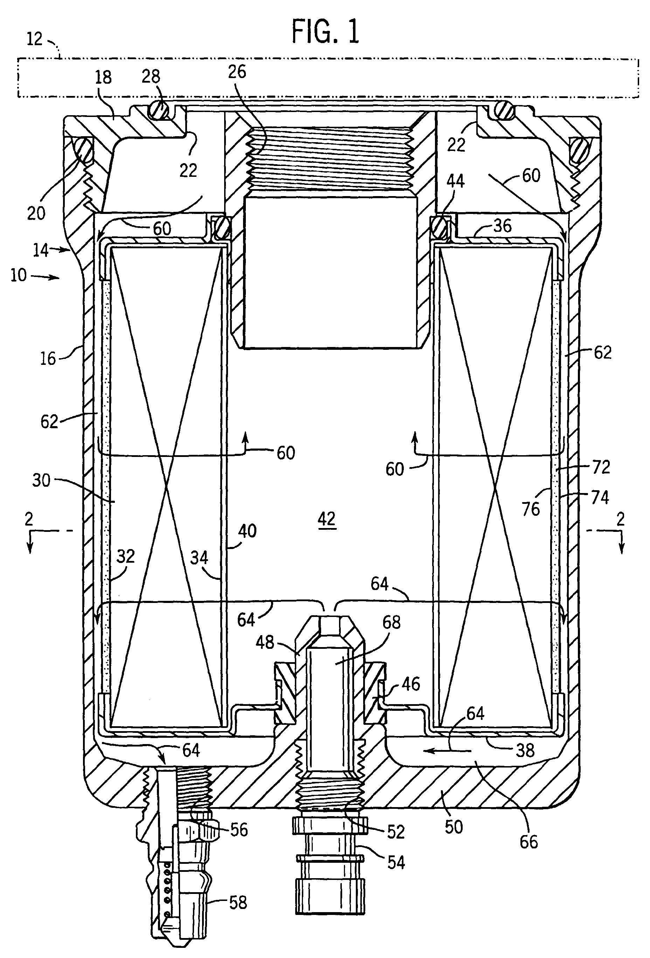

Fig. 1 shows a filter 10 for filtering fluid, such as lubricating oil, from a machine 12, such as an internal combustion engine. Filter housing 14 includes an open-topped cylindrical canister 16 closed by threaded adapter plate 18 in sealing relation at O-ring 20. Adapter plate 18 has a plurality of circumferentially spaced openings 22 providing inlets for receiving fluid from machine 12, for example, engine oil, and having an outlet 26 for returning the fluid to the machine. Outlet 26 is internally threaded for mounting to a mounting boss of an internal combustion engine as is standard. The filter housing at adapter plate 18 is mounted to the engine block in sealing relation at O-ring 28. Mounted within the housing is a fluid filter element 30 provided by pleated filter media having an upstream dirty side 32 and a downstream clean side 34 and filtering fluid passing therethrough from upstream side 32 to downstream side 34, as is standard. The pleated filter media is potted between end caps 36 and 38, and includes an inner perforated metal liner 40 engaging and supporting the inner pleat tips and defining hollow interior 42 of the filter. Upper end cap 36 is sealed to the adapter plate outlet at O-ring 44. Lower end cap 38 is sealed at grommet 46 to a central upstanding stud portion 48 extending axially upwardly from lower end 50 of the housing. The filter housing has a central lower threaded inlet 52 receiving air inlet valve 54 in threaded relation. The filter housing has a lower threaded outlet 56 receiving a drain valve 58 in threaded relation, all as in the noted incorporated U.S. Patent 5,779,900. As noted in US Patent 5,779,900 the filter housing has a first flow path therethrough as shown at arrows 60 from inlets 22 then flowing downwardly through outer annular passage 62 then flowing radially inwardly through pleated filter media element 30 then flowing axially upwardly through outlet 26. The filter housing has a second flow path therethrough as shown at arrows 64 flowing from inlet 52 axially upwardly into hollow interior 42 then radially outwardly and then downwardly through outer annular passage 62 to lower collection chamber 66 to outlet 56 and through drain valve 58. During normal filtering operation during running of the engine, lubricating oil flows along the noted first flow path 60 and is filtered and returned to the engine. With the engine off, a cleaning cycle can be initiated by introducing a cleansing fluid such as air at inlet valve 54 such that air flows along the noted second flow path 64 to backflush and clean pleated filter element 30. An auxiliary filter element 68 within stud portion 48 filters the cleansing fluid such as air. The above described structure and operation is known in the prior art, for which further reference may be had to US Patent 5,779,900.

In the present invention, an outer wrap 72, Fig. 1, of surface filter media is provided around and adjacent pleated filter media 30 along the upstream side 32 of the latter. It is significant that outer wrap 72 be surface filter media, not depth media. It has been found that surface filter media provides significant performance advantages, particularly in cleanable, reusable filter backflushing applications, as will be noted below.

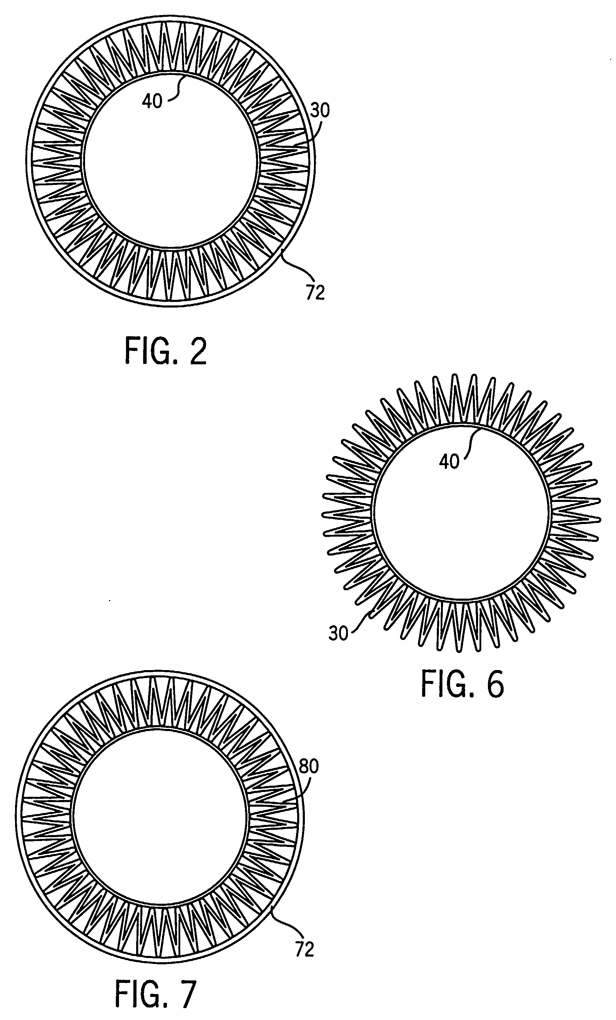

Outer wrap 72, Figs. 1 and 2, has an upstream side 74 and a downstream side 76 and filters fluid passing therethrough, such as engine lubricating oil along noted flow path 60, from upstream side 74 of outer wrap 72 to downstream side 76 of outer wrap 72. Outer wrap 72 retains sludge and semi-solid contaminants during filtration, and releases same upon backflushing, to enable cleaning of outer wrap 72. The material of outer wrap 72 is selected from the group consisting of melt-blown filter media, spun-bond filter media, and drylaid filter media, none being depth media, and all being of uniform density, not gradient density.

Outer wrap 72 is selected to have a lower efficiency than pleated filter media 30, and to have a dust and sludge holding capacity which is at least 10% that of the pleated filter media. The outer wrap is selected to be less efficient and more open than the pleated filter media. The outer wrap is selected to have an effective pore size ranging from 2 to 100 times larger than that of the pleated filter media, preferably 2 to 20 times larger. In one embodiment, the pore size of the outer wrap is about 6 times larger than that of the pleated filter media with 50% removal efficiency. In the noted embodiment, the outer wrap has a 12 micron pore size at 50% removal efficiency, and the pleated filter media has a 2 micron pore size at 50% removal efficiency. In such context, pore size is defined as the particle, i.e. contaminant, size that exhibits 50% removal efficiency. Removal also occurs for larger particle sizes, where the efficiency will be greater than 50%. Removal also occurs for smaller particle sizes, where the efficiency will be less than 50%. The thickness of outer wrap 72 is less than 2 millimeters, and preferably less than 0.75 millimeters. Outer wrap 72 is selected to have a Frazier permeability at least 2 times that of pleated filter media 30. In one embodiment, outer wrap 72 has a Frazier permeability of 0,737 m³/min · cm² (168 cubic feet per minute per square inch), and pleated filter media 30 has a Frazier permeability of 0,215 m³/min · cm² (49 cubic feet per minute per square inch). The ratio of the area of media face exposed to flow of the pleated filter media versus the outer wrap is at least 2, and preferably in the range of 2 to 50.

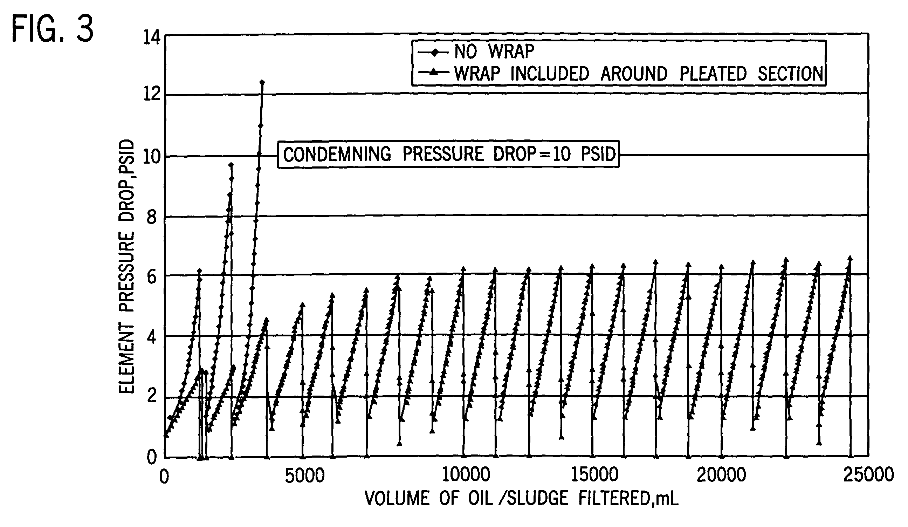

Fig. 3 is a graph showing filter performance without outer wrap 72 at the diamonds, and with outer wrap 72 at the triangles. The Y-axis shows element pressure drop in pounds per square inch differential, psid, and the X-axis shows volume of oil/sludge filtered in milliliters, mL. Condensed testing was performed by using sludge about 50 times more contaminated than normal and by reducing the surface filter area exposed to flow to about 1/50 the normal size, thus resulting in accelerated filter plugging by a factor of about 2500. In the graph of Fig. 3, each upper peak represents the end of a loading cycle, immediately prior to the start of a cleaning cycle, after a flow of about 1.15 liters. That is, after 1.15 liters of oil was filtered, the filter was backflushed, and then another filtering cycle was started. The test was stopped when the filter restriction reached 0,704 kg/cm² (10 pounds per square inch) differential, indicating that the filter was plugged, i.e. a condemning pressure drop. Without outer wrap 72, the filter plugged after only 3 cleaning cycles. With the outer wrap, the element pressure drop was only about 0,352 kg/cm² (5 pounds per square inch) differential. As seen in the graph, even after further filtering and cleaning cycles, the element pressure drop only rose to slightly above 0,422 kg/cm² (6 pounds per square inch) differential. The test was stopped after 21 cleaning cycles. The element pressure drop never did reach the terminal condition of 0,704 kg/cm² (10 pounds per square inch) differential, i.e. the condemning pressure drop. Outer wrap 72 increased the life of pleated filter media element 30 from 3 to more than 21 cleaning cycles. Under the noted accelerated test conditions, one cleaning cycle represents one oil change interval for an engine. The outer wrap was the noted meltblown material, 0.5 millimeters thick, having a pore size of 12 microns at 50% removal efficiency, and a Frazier permeability of 0,737 m³/min · cm² (168 cubic feet per minute per square inch), and an area of 30,97 cm² (4.8 square inches).

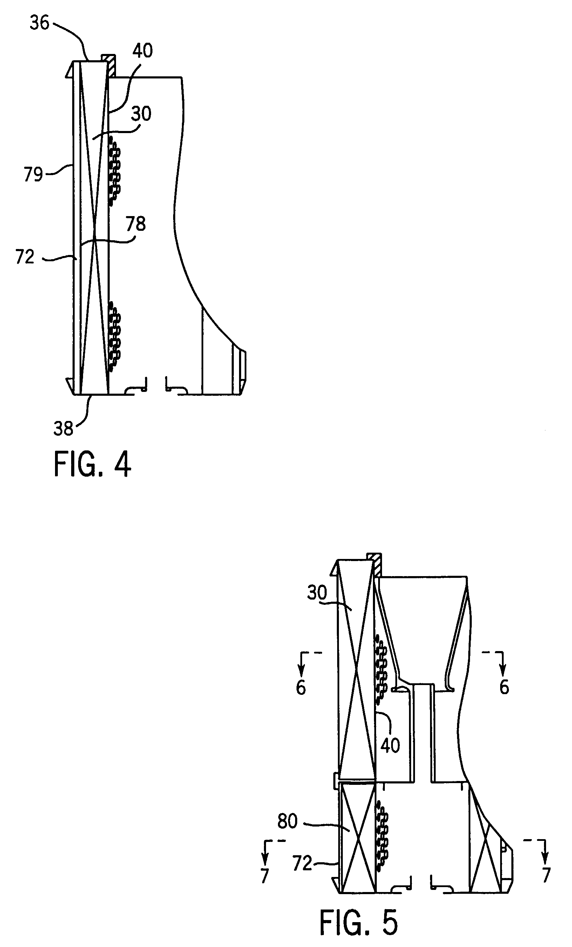

Fig. 4 shows another embodiment of the filter element of Fig. 1 and uses like reference numerals from above where appropriate to facilitate understanding. In Fig. 4, a layer of perforated metal screen 78 is provided along the upstream side of pleated filter media 30 and maintains pleat spacing during fluid filtration and during cleaning backflushing and separates the pleated filter media 30 from outer wrap 72. Another layer of perforated metal screen 79 is provided along the upstream side of outer wrap 72 and together with screen 78 provides support for outer wrap 72 during filtration and during cleaning backflushing. In various alternatives, the construction of Fig. 4 is provided without one or the other of screens 78 and 79, i.e. in one alternative, only screen 78 is provided along the downstream side of outer wrap 72 and upstream side of filter media 30, and in another embodiment, only outer screen 79 is provided along upstream side of outer wrap 72. Additional support layers for outer wrap 72 may be provided by support material called scrim, as known in the art, which is an open large fiber diameter non-woven material with negligible contaminant removal efficiency and pressure drop. One or more scrim layers may be provided along the upstream side and/or downstream side of outer wrap 72, including for support during the manufacturing process, including melt blowing, where it may be needed to support the actual filter media matrix during production and/or to provide strength and structural integrity to the media during use. In one embodiment, outer wrap 72 and pleated filter media 30 are unattached to one another. In another embodiment, outer wrap 72 and pleated filter media 30 are potted together in one or both of end caps 36 and 38.

Fig. 5 shows another alternate embodiment of the filter of Fig. 1 and uses like reference numerals from above where appropriate to facilitate understanding. In addition to main full-flow pleated filter media element 30, a bypass pleated filter media element 80 is provided, co-axially aligned with element 30. Outer wrap 72 is provided around at least one of the filter elements, preferably bypass element 80. A venturi 82 may be provided in the filter, as known in the art, for example as shown in U.S. Patent 5,695,637, incorporated herein by reference.

The features and alternatives explained above for the full-flow filter element 30 can be applied for the bypass filter element 80 as well wherever it seems to be appropriate.

It is recognized that various equivalents, alternatives and modifications are possible within the scope of the appended claims. The invention may be used with lubrication oil filters, both reusable and disposable types, hydraulic oil filters, fuel filters, and the like.

## Claims

1. A fluid filter element comprising pleated filter media (30) having an upstream dirty side (32) and a downstream clean side (34) and filtering fluid passing therethrough from said upstream side (32) to said downstream side (34), an outer wrap (72) of surface filter media, not depth media, adjacent said pleated filter media (30) along said upstream side (32) thereof, said outer wrap (72) having an upstream side (74) and a downstream side (76) and filtering fluid passing therethrough from said upstream side (74) of said outer wrap (72) to said downstream side (76) of said outer wrap (72).

2. Fluid filter element according to claim 1 wherein said outer wrap (72) retains sludge and semi-solid contaminants during filtration, and releases same upon backflushing, to enable cleaning of said outer wrap (72)
and/or wherein said outer wrap (72) is of uniform density, not gradient density.

3. Fluid filter element according to claim 1 or 2 wherein said outer wrap (72) has an effective pore size at 50% removal efficiency ranging from 2 to 100 times larger than said pleated filter media (30),
preferably wherein said pore size of said outer wrap (72) at said 50% removal efficiency is about 2 to 20 times larger than said pleated filter media (30), further preferably wherein said pore size of said outer wrap (72) at said 50% removal efficiency is about 6 times larger than said pleated filter media (30).

4. Fluid filter element according to any preceding claim, wherein said pleated filter media (30) retains sludge and semi-solid contaminants during filtration, and releases same upon backflushing, to enable cleaning of said pleated filter media (30)
or wherein said outer wrap (72) and said pleated filter media (30) each retain sludge and semi-solid contaminants during filtration, and release same upon backflushing, to enable cleaning of said outer wrap (72) and said pleated filter media (30).

5. Fluid filter element according to any preceding claim, comprising a layer of screen along said upstream side (32) of said pleated filter media (30) maintaining pleat spacing during fluid filtration and during cleaning backflushing and separating said pleated filter media (30) from said outer wrap (72)
and/or
comprising at least one layer of scrim along at least one of said upstream side (74) and said downstream side (76), preferably said downstream side (76), of said outer wrap (72).

6. Fluid filter element according to any preceding claim, wherein said outer wrap (72) and said pleated filter media (30) are unattached to one another or wherein said pleated filter media (30) extends between distally opposite end caps 36, 38), and wherein said outer wrap (72) and said pleated filter media (30) are potted together in at least one of said end caps(36, 38).

7. Fluid filter element according to any preceding claim wherein said outer wrap (72) is less efficient and more open than said pleated filter media (30), and wherein said outer wrap (72) has a thickness less than 2 millimeters, preferably less than 0.75 millimeters,
and/or wherein said outer wrap (72) has a Frazier permeability at least 2 times that of said pleated filter media (30),
and/or wherein the ratio of the area of media face exposed to flow of said pleated filter media (30) versus said outer wrap (72) is at least 2, preferably said ratio is in the range of 2 to 50.

8. A cleanable re-usable filter for filtering fluid from a machine, comprising:
a filter housing (14) having a first inlet (22) receiving a first fluid from said machine, a first outlet (26) returning said first fluid to said machine, a second inlet (52) selectively receiving a second cleansing fluid for backflushing, and
a second outlet (56) exhausting said second fluid and backflushed contaminants,
a first filter element (30) comprising pleated filter media (30) in said filter housing (14) and having an upstream dirty side (32) and a downstream clean side (34),
said filter housing (14) having a first flow path (60) therethrough from said first inlet (22) then though said first filter element (30) in one direction then to said first outlet (26),
said filter housing (14) having a second flow path (64) therethrough from said second inlet (52) then through said first filter element (30) in the opposite direction then to said second outlet (56), said first and second flow paths (60, 64) having a common but opposite direction portions through said first filter element (30),
a second filter element (72) in said housing comprising an outer wrap (72) of surface filter media, not depth media, around said first filter element (30), said first flow path (60) progressing first through said second filter element (72) and then through said first filter element (30), said second flow path (64) progressing first through said first filter element (30) and then through said second filter element (72), said second filter element (72) having a downstream side (76) facing said first filter element (30), and an upstream side (74) facing away from said first filter element (30), such that during backflushing with said second fluid along said second flow path (64), contaminants are released from said first filter element (30) into a space between said upstream side (32) of said first filter element (30) and said downstream side (76) of said second filter element (72), and such that contaminants flow from said space and pass through said second filter element (72) from said downstream side (76) of said second filter element (72) to said upstream side (74) of said second filter element (72), and such that contaminants are also released from said upstream side of said second filter element (72).

9. A filter for filtering fluid, comprising:
a cylindrical filter housing (14) extending along an axis and having an inlet (22) for receiving said fluid, and an outlet (26) for discharging said fluid, a full-flow filter element (30) in said filter housing (14) comprising pleated filter media (30) having an upstream dirty side (32) and a downstream clean side (34) and filtering fluid passing therethrough from said upstream side (32) to said downstream side (34),
a bypass filter element (80) in said filter housing (14) co-axially aligned with said full-flow filter element (30) and comprising pleated filter media (80) having an upstream dirty side and a downstream clean side and filtering fluid passing therethrough from said upstream side to said downstream side,
an outer wrap (72) of surface filter media, not depth media, around at least one of said full-flow filter element (30) and said bypass filter element (80), said outer wrap (72) having an upstream side and a downstream side and filtering fluid passing therethrough from said upstream side of said outer wrap (72) to said downstream side of said outer wrap,
wherein, preferably, said outer wrap (72) is around said bypass filter element (80).

10. Filter according to claim 9 wherein said outer wrap (72) around said bypass filter element (80) defines an annulus extending parallel to said upstream dirty side of said full-flow filter element (30),
preferably wherein said outer wrap (72), said bypass filter element (80), and said full-flow filter element (30) are all coaxial,
preferably wherein said annulus of said outer wrap (72) and said upstream dirty side (32) of said full-flow filter element (30) are colinearly aligned.

11. Filter according to claim 9 comprising the features of one or more of claims 2 to 7, applied to the full-flow filter element (30) and/or to the bypass filter element (80) wherever it is appropriate.
